# EUROPEAN PATENT SPECIFICATION

(11) **EP 3 913 751 B1**
(45) Date of publication and mention of the grant of the patent: **14.02.2024**
(21) Application number: 21174279.6
(22) Date of filing: 18.05.2021
(51) Int. Cl.: H01S 3/102, H01S 3/30, H01S 3/00, H01S 3/094, H01S 3/081, H01S 3/083, H01S 3/11, H01S 3/16, H01S 3/10, H01S 3/067, H01S 3/1118

(54) **LASER FOR NONLINEAR MICROSCOPY COMPRISING A RAMAN WAVELENGTH CONVERTER**
LASER FÜR NICHTLINEARE MIKROSKOPIE MIT EINEM RAMAN WELLENLÄNGEN-KONVERTER
LASER POUR MICROSCOPIE NON-LINÉAIRE COMPRENANT UN CONVERTISSEUR DE LONGEUR D'ONDE RAMAN

(30) Priority: 22.05.2020 LT 2020526
(43) Date of publication of application: 24.11.2021
(73) Proprietor: UAB "Ekspla", 02300 Vilnius (LT)
(72) Inventor: MICHAILOVAS, Andrejus, 02300 Vilnius (LT); MADEIKIS, Karolis, 02300 Vilnius (LT); BARTULEVICIUS, Tadas, 02300 Vilnius (LT)
(74) Representative: Draugeliene, Virgina Adolfina

(56) References cited:
- US-A1- 2016 317 228
- MURTAGH MICHELLE ET AL: "Ultrafast second-Stokes diamond Raman laser", OPTICS EXPRESS, vol. 24, no. 8, 6 April 2016 (2016-04-06), pages 8149-8155, XP055850817, DOI: 10.1364/OE.24.008149
- PERILLO EVAN P ET AL: "Two-color multiphoton in vivo imaging with a femtosecond diamond Raman laser", LIGHT: SCIENCE & APPLICATIONS, vol. 6, no. 11, 1 June 2017 (2017-06-01), pages 1-8, XP055851544, DOI: 10.1038/lsa.2017.95
- GAO XIAOQIANG ET AL: "Study on picosecond collinear eight Stokes Raman laser generation", APPLIED OPTICS, vol. 56, no. 5, 6 February 2017 (2017-02-06), pages 1383-1387, XP055851547, US ISSN: 0003-6935, DOI: 10.1364/AO.56.001383
- FRANK MILAN ET AL: "All-solid-state, synchronously pumped, ultrafast BaWORaman laser with long and short Raman shifts generating at 1180, 1225, and 1323 nm", PROCEEDINGS OF SPIE; [PROCEEDINGS OF SPIE ISSN 0277-786X VOLUME 10524], SPIE, US, vol. 10603, 1 December 2017 (2017-12-01), pages 106030Y-106030Y, XP060096469, DOI: 10.1117/12.2292818 ISBN: 978-1-5106-1533-5
- GRANADOS EDUARDO ET AL: "Deep ultraviolet diamond Raman laser References and links", OPTICS EXPRESS, vol. 19, no. 11, 19 May 2011 (2011-05-19), pages 10857-10863, XP055851555,

## Description

### Technical field of the invention

The invention relates to laser sources, particularly to sources of laser radiation for nonlinear microscopy. In particular, the invention relates to compact and reliable devices generating ultrashort pulses in the infrared spectral range between 1.1µm and 1.5µm with the help of stimulated Raman scattering. The invention can be used in nonlinear microscopy devices for the studies of biological tissues.

### Indication of the background art

Nonlinear microscopy of biological tissues needs laser sources generating between 1.1µm and 1.5µm, see L. van Huizen et al., "Second and third harmonic generation microscopy visualizes key structural components in fresh unprocessed healthy human breast tissue," J. Biophotonics 12, e201800297 (2019), M. Balu et al., "Effect of excitation wavelength on penetration depth in nonlinear optical microscopy of turbid media," J. Biomed. Opt. 14, 010508 (2009) and D. Kobat et al., "In vivo two-photon microscopy to 1.6-mm depth in mouse cortex," J. Biomed. Opt. 16, 106014 (2011). The second (IIH) or third (IIIH) harmonic generated in the tissues by near-infrared radiation fall in a transparency window of tissues, hence has no destructive effect, and is easily registered.

Due to the limited number of laser sources that can generate femtosecond pulses in this spectral region, nonlinear light conversion is frequently used. One of the techniques is an inelastic scattering of light occurring due to vibrations of molecules or ions in a material that is under exposure of an electromagnetic field, the phenomenon called Raman scattering. Raman lasers are being developed, where, in a Raman medium, a wavelength of the pump radiation is shifted by a certain amount (Raman shift) specific to that medium. A longer-wavelength component called Stokes wave and a shorter-wavelength component called anti-Stokes wave are generated. The process takes place when a threshold value of the pump radiation intensity is reached. With an efficient light conversion, cascading phenomena begin: the first-order Stokes wave becomes a new pump radiation to generate the second-order Raman components, and so on. For example, pump radiation of 1030nm wavelength can generate a 1194nm first-order Stokes wave in a diamond crystal, and this generates a 1420nm second-order Stokes wave. Pump radiation of 1064nm wavelength can generate Raman radiation of 1240nm and 1485nm wavelengths, respectively. The process begins from quantum noise, and is called spontaneous Raman scattering. First generated photons of the shifted-wavelength radiation become a seeding radiation in a further nonlinear interaction, thus turning the process into a stimulated Raman scattering. This is the principle of operation of stimulated Raman scattering lasers, shortly SRS lasers or Raman lasers. Raman lasers rely on nonlinear wavelength conversion and, therefore, need a source of laser radiation for pumping. Conversion to Raman wavelength is sometimes implemented by placing the nonlinear crystal into a resonator of the pump laser. Having two laser sources whose wavelengths differ by an amount equal to the Stokes shift of the nonlinear crystal, Raman amplification is realized: the weaker wave is amplified at the expense of the stronger wave.

Typical Raman media are: optical fibers, waveguide structures and various crystals - diamond, KGd(WO₄)₂ (abbreviated as KGW), KY(WO₄)₂ (abbreviated as KYW), LilO₃, NaNO₃, Ba(NO₃)₂, GdVO₄, YVO₃, GdVO₃, BaWO₄, SrWO₄, PbWO₄ and others. The efficiency and Raman shift depend on a structure and a crystallographic direction of the crystal. Said materials feature high SRS efficiency. The stimulated Raman scattering also occurs in gases and liquids, but they are not very suitable for high-power high-repetition-rate Raman lasers due to thermal effects that degrade the laser beam until the generation completely terminates. KGW and Ba(NO₃)₂ are the most commonly used crystalline Raman media. Currently, the synthetic diamond receives a growing attention as a Raman medium. The diamond is one of the first materials in which the stimulated Raman scattering has been demonstrated, but its widespread use has begun only recently, because crystals of practical sizes are grown only by chemical vapor deposition technique. The diamond has a large Raman shift (1332cm⁻¹), a high Raman gain (~10cm/GW at 1µm for nanosecond pump pulses) and a wide transparency range. High thermal conductivity allows its use in high-average-power systems.

Raman lasers pumped by pulsed or continuous-wave radiation are known. First Raman lasers comprised the Raman medium placed inside a resonator of a nanosecond Q-switched free-space laser. Later, fiber Raman lasers were developed, which, because of the property of fiber-optic elements to confine the pump radiation in a narrow thread and due to the long interaction length, allowed to achieve a continuous-wave operation mode. Also, solutions are known which have a separate laser source of pump radiation, and the Raman medium is placed in an external optical resonator. Pulsed sources of pump radiation have higher peak powers (higher instantaneous intensities), thus ensuring better conditions for nonlinear interaction to occur. In order to generate ultrashort pulses of Raman radiation, the pump pulses must also be ultrashort. The extremely high peak power of the ultrashort pulses ensures high instantaneous efficiency of the Raman scattering, but the overall efficiency of the nonlinear conversion reduces due to an extremely short interaction time, thus a synchronous pumping solution usually is required.

Due to the inelastic scattering origin of the Raman effect, a pulse of the Stokes (or anti-Stokes) wave is generated with a time delay with respect to the pump pulse. Therefore, the highest conversion efficiency in the synchronous pumping scheme is achieved when there is a small mismatch, of several to several tens of micrometers, between lengths of the external Raman resonator and the pump source resonator - a roundtrip time of the Raman resonator must be less than a period of pump pulses. On the other hand, the highest value of peak power is obtained when there is no length detuning of said resonators, or the roundtrip time of the Raman resonator is even longer than the period of pump pulses. Even without an occurrence of self-phase modulation and spectral broadening, the Stokes pulse time delay, a group velocity mismatch and a pump pulse depletion result in a shortening of the Stokes pulse (usually at an expense of conversion efficiency, but the peak power remains high). An optimal resonator length is chosen depending on the goals.

When pumping with fundamental radiation of well-developed 1µm lasers, the near-infrared spectral region above 1.1µm is achieved. When pumping with a second harmonic radiation of the aforementioned lasers - a spectral window in the visible spectral range between 590nm and 750nm is covered. Nonlinear microscopy of biological tissues especially needs the wavelengths in the infrared spectral region. Radiation in the range between 1.1µm and 1.5µm is most appropriate for nonlinear microscopy because a second or third harmonics generated in biological tissues still fall in a transparency window of the tissues, and pump radiation for Raman laser can be generated by efficient Nd- or Yb-ion lasers. Another feature of an ideal laser for nonlinear microscopy is the high peak intensity of the pulses provided by the ultrashort - preferably femtosecond - pulses generated at a high pulse repetition rate. The use of lasers that generate in the transparency window of biological tissues allows to register nonlinear signals reliably without damaging the tissues.

In fiber Raman lasers, stimulated Raman scattering occurs in the same active fiber in which the pump radiation is generated, or in an optical fiber separate from the pump source. They face dispersion management challenges (see, e. g., E. A. Golovchenko et al., "Theoretical and experimental study of synchronously pumped dispersion-compensated femtosecond fiber Raman lasers," J. Opt. Soc. Am. B 7, 172-181 (1990) or U. S. Pat. No. US4685107 (J. D. Kafka et al.). If the dispersion is not controlled, then the pulse duration is not preserved, the peak power decreases and the efficiency of the Raman scattering process decreases.

Higher peak powers are achieved using bulk Raman media - crystals. Having such a peak power of the pump radiation, which already causes self-phase modulation and spectral broadening, but the threshold of crystal damage is not yet exceeded, a significant shortening of a Raman radiation pulse can be achieved - pulses of the Stokes (or anti-Stokes) wave will be several times shorter than the pump pulses.

M. Murtagh et al., "Efficient diamond Raman laser generating 65 fs pulses", Opt. Express 23, 15504-15513 (2015) describes a synchronously pumped Raman laser of femtosecond pulses, comprising:
- a pump source of 796nm wavelength radiation generating 194fs pump pulses,
- an optical resonator with an 8-mm-long diamond crystal inside; the resonator consists of 4 mirrors forming a circular light trajectory, and
- a pulse compressor located externally from said optical resonator.
A mode-locked titanium-sapphire oscillator with a maximum output power of 3.1W (~38nJ) was used as the pump source. The stimulated Raman scattering began to occur at 0.74W pump power, and then the Raman radiation (890nm) power increased linearly up to 0.82W at the highest pump power. 26% conversion efficiency from the pump radiation to the Stokes wave was achieved. After pulse compression, a 65fs pulse duration was obtained, thus the peak power was about 157kW. The length of the Raman resonator was ~3.75m in order to fulfill the condition of synchronous pumping with a continuous train of pump pulses of 80MHz pulse repetition rate.

J. Lin and D. J. Spence, "Diamond Raman laser generating 25.5 fs pulses", Advanced Solid State Lasers, OSA Technical Digest, ATu4A.8 (2015) describes another Raman laser synchronously pumped by femtosecond pulses, comprising:
- a pump source of ~800nm radiation generating 128fs pump pulses,
- an optical resonator with an 8-mm-long diamond crystal inside; the resonator consists of 6 mirrors forming a circular light trajectory and controlling the dispersion of the resonator (2 mirrors are chirped, and a pulse circulating inside the resonator is reflected 6 to 10 times at every resonator roundtrip), and
- a pulse compressor located externally from the resonator.
With a 3W power 80MHz pulse repetition rate titanium-sapphire pump source, an output power of 0.38W (energy 4.75nJ) at 890nm was attained, i. e. conversion efficiency to Stokes wave was 12.7%. A dispersion control was implemented inside the Raman resonator, thus an extremely high peak power was preserved; a significant spectral broadening occurred because of self-phase modulation. This resulted in pulse duration of 134fs directly from the resonator and 25.5fs after compression by an external prism pulse compressor. It corresponds to the high peak power of 186kW. However, since the pump pulses are femtosecond, the output power is very sensitive to the Raman resonator length variation - the length must be maintained with an accuracy of several micrometers.

Raman lasers pumped by more powerful titanium-sapphire lasers achieve an impressive conversion efficiency and shortening of pulse duration. Unfortunately, they operate on the edge of the tissue transparency range: second harmonic, and especially third harmonic, signals fall within the range of tissue absorption. A typical 80MHz pulse repetition rate results in relatively large dimensions of Raman resonator. The laser source, which features high prime cost and complexity and is maintenance-intensive, used in the nonlinear microscopy system, makes the whole system extremely costly. With the titanium-sapphire pump source, wavelengths suitable for nonlinear microscopy at or above 1.1µm are generated only in a cascade scheme, see M. Murtagh et al., "Ultrafast second-Stokes diamond Raman laser," Opt. Express 24, 8149-8155 (2016). In the solution of *M*. *Murtagh et al.,* the conversion efficiency does not exceed 20%, and the pulse is significantly longer than the pump pulse because it is chirped and has a complex phase profile that makes it difficult to compress.

If record-breaking pulse durations and extremely high peak powers are not a goal, sources of pump radiation that are simpler and less expensive than titanium-sapphire lasers are being sought. A. M. Warrier et al., "Highly efficient picosecond diamond Raman laser at 1240 and 1485 nm," Opt. Express 22, 3325-3333 (2014) describes a picosecond synchronously pumped Raman laser, comprising:
- a picosecond (15ps) 1064nm pump radiation source,
- an optical resonator consisting of 4 mirrors which form a circular trajectory for light, and
- an 8-mm-long diamond crystal placed inside said optical resonator.
A 80MHz mode-locked Nd:YVO₄ laser of an average power equal to 4.8W (60nJ energy) was used for pumping. After selecting the length of the Raman resonator so that the threshold for stimulated Raman scattering was minimized, 2.75W of average power of Raman radiation (1240nm) was achieved at the highest pump power. An extremely high conversion efficiency to shifted-wavelength radiation was obtained (59%). The pulse duration of 1240nm wavelength radiation depends on the length of the resonator. 12ps is obtained when the resonator length corresponds to the highest output power. When the resonator is extended, 9ps is obtained but the power drops to ~1.8W. Thus, a peak power of 2.8kW or 2.5kW at 1240nm can be obtained. The reduction of pulse duration, typical in solutions with femtosecond pump sources, is not achieved since self-phase modulation with picosecond pulses does not occur. On the other hand, when pumping with picosecond pulses, there is no need to take care of dispersion control and pulse compression. In addition, the power and duration of Raman radiation much less depend on the resonator length stability - the resonator length must be maintained with an accuracy of ten micrometers. According to the second embodiment of *A. M. Warrier et al.* solution, conditions are created for generation of the second-order Stokes wave. Herein, two wavelengths - 1240nm and 1485nm - are emitted by the Raman resonator. The power of the second-order Stokes wave can attain 1W at the highest pump power of 4.8W, which corresponds to the pump-to-1485nm conversion efficiency of 21%, but is more sensitive to changes in resonator length. The pulse duration at the highest output power is 10ps. The minimum pulse duration is 6ps, but the peak power decreases (it is possible to have up to 1.25kW peak power at 1485nm). Thus, although the pulse duration of Raman radiation is shorter than the duration of the pump pulses, the peak power decreases. A simpler, cheaper and of smaller dimensions picosecond pump source makes the whole system less complex and less expensive, however nonlinear microscopy applications prefer femtosecond pulses.

It is easier to work with mode-locked pump sources generating continuous trains of pulses because the process starts from quantum noise only at the very beginning of the pulse train. Later, the process stabilizes - the stimulated Raman scattering occurs with the existence of the pulse circulating inside the resonator with sufficient intensity to seed the nonlinear interaction. Operation at gain saturation regime ensures high conversion efficiency and strongest pulse shortening. By ensuring a constant resonator length, a stable train of Raman radiation pulses can be obtained. However, as already mentioned, the typical repetition rate of the pump pulses from tens of MHz to 100MHz determines the length of the Raman resonator to be of several meters. Such a system sets strict requirements on the stabilization system, and cannot be compact. A long resonator is more sensitive to mechanical and thermal impacts, while if folding the resonator onto a more compact plate, its opto-mechanical construction becomes complex.

In order to have a practical laser system for nonlinear microscopy, both - the pump source and the system module, where the stimulated Raman scattering is performed, must be compact.

E. P. Perillo et al., "Two-color multiphoton in vivo imaging with a femtosecond diamond Raman laser, " Light Sci. Appl. 6, e17095-e17095 (2017) describes a compact and inexpensive laser system for nonlinear microscopy based on the synchronous pumping of a resonator with a Raman medium placed inside. Femtosecond synchronously pumped Raman laser comprises:
- a femtosecond Yb-fiber source of pump radiation,
- an optical resonator consisting of 6 mirrors forming a circular light trajectory and accommodating a long resonator in a smaller space,
- an 8-mm-long diamond crystal inside the resonator and
- a two-prism pulse compressor.
The fiber pump source with 3W average power consists of a mode-locked oscillator (master oscillator) and a power amplifier. Parameters of the amplifier are chosen so that the nonlinear spectral broadening and the fiber dispersion are balanced, as a result of which the pulses acquire only a linear chirp that can be eliminated by a diffraction-grating pulse compressor. A continuous train of pulses of 150fs duration and 80MHz repetition rate is obtained at the output of the pump source. The ~3.75m optical length of the Raman resonator corresponds to the repetition period of the pump pulses, however, it is accommodated in a <1m-long space with the help of additional mirrors. There are possibilities to precisely adjust the length of the resonator. The generated Raman radiation is emitted through an 8% transmission mirror at each resonator roundtrip. The broadband radiation exits the Raman resonator with a slight chirp due to the high dispersion of the diamond crystal. Therefore, an external pulse compressor was necessary. 300mW average power of Stokes radiation (1240nm) comprising a sequence of 100fs pulses was obtained at the output of the whole system. This corresponds to ~30kW peak power. The system becomes rather compact because of two reasons: the source of pump radiation is fiber-optic, and because of the insertion of additional mirrors in the Raman resonator. Although the total cost of the system was at least twice lower than the cost of an analogous system with a titanium-sapphire pump laser, the low optical efficiency of about 10% indicates that the parameter set was not optimally chosen. Additional mirrors increase the resonator loss, and the requirements for stabilization system for the ~4m long resonator are practically not reduced.

A compact Raman laser of external-resonator configuration can be realized if the sequence of pump pulses from the mode-locked laser has an extremely high repetition rate. Fiber and semiconductor sources have been developed which provide a continuous train of pulses with GHz repetition rate, but their-pulse energy is insufficient to cause the Raman scattering.

The closest prior art are solutions of *X. Gao et al.* described in the following publications: X. Gao et al., "Compact KGd(WO4)2 picosecond pulse-train synchronously pumped broadband Raman laser," Appl. Opt. 55, 6554-6558 (2016) and X. Gao et al., "Study of a picosecond collinear eight Stokes Raman laser generation," Appl. Opt. 56, 1383-1387 (2017). Compact synchronously pumped ultrafast Raman lasers comprise:
- a picosecond (30ps) source of pump radiation based on solid-state Nd:YVO₄ and Nd:YAG media,
- a 2-mirror optical resonator, and
- a 50-mm-long KGW crystal inside the resonator.
The pump source operates in a burst mode: a pulse of the mode-locked Nd:YVO₄ oscillator enters a pulse burst synthesizer, and then the formed burst of pulses is amplified in a regenerative Nd:YAG amplifier, later a second harmonic is generated.

In the solution of *X. Gao et al.* (2016), the pump source generates a burst of pump pulses (of 532nm wavelength) consisting of 6 pulses; the burst repeats at 1kHz repetition rate, and the repetition rate of the pulses inside the burst (intra-burst) is 1.25GHz. An overall duration of the burst is 4ns and a width of individual pulses is 30ps. Since the intra-burst pulse period is only 800ps, the synchronously pumped Raman resonator is extremely short - of only ~70mm geometric length. The aim of said solution was to obtain many wavelengths in a wide spectral range, therefore, one resonator mirror has high transmittance for pump radiation and high reflectance to shifted-wavelength radiation, and the other has a 2% transmittance for radiation from 532nm to 650nm. This synchronously pumped Raman laser generates several shifted-wavelengths: 558nm (first-order Stokes wave), 588nm (second-order Stokes wave), 621nm (third-order Stokes wave), 658nm (fourth-order Stokes wave) and 699nm (fifth-order Stokes wave), which, together with the residual pump radiation, are partially emitted at each resonator roundtrip. The high power pump source leads to the average power of 270mW to be obtained at the output (at 1kHz repetition of bursts). However, the total power efficiency of the broadband output radiation does not exceed 8%, and, from a certain pump power value it starts to decrease.

In the solution of *X. Gao et al.* (2017), the pulse burst is reduced to 4 pulses, and a configuration of the Raman resonator is changed to reduce the mode size of the pump beam. The transmittance of the output mirror is increased to 5% for wavelengths from 500nm to 750nm, to 20% for 800nm and even to >90% for longer wavelengths. The lower number of pulses within a pump burst was made only because the burst synthesizer used in the solution did not guarantee an identical pulse period inside the burst, which caused instability. The reduction of the mode size of the pump beam improved the conversion efficiency greatly, as a result of which even with 4 pump pulses within the burst the ~30% conversion efficiency from pump radiation to eight orders of Stokes radiation was obtained. The conversion efficiency to the first-order Stokes wave radiation was -6%.

A new pumping method by bursts of pulses has made it possible to reduce a length of the Raman resonator to very small dimensions, but it also has several drawbacks. First, at the beginning of each burst of pump pulses, the process of Raman scattering begins from quantum noise. With high-energy pump pulses Raman radiation develops rapidly but this method would be more difficult to apply to low-pulse-energy pump sources. Second, the conversion efficiency is less than 50%. Third, in the solutions of *Gao et al.,* it is not possible to form bursts of pump pulses longer than 6 pulses or - most importantly - bursts with the same period. Conversion efficiency values indicate that saturation mode has not been achieved. Therefore, this solution cannot offer a compact femtosecond pulse generation device suitable for nonlinear microscopy.

### Technical problem to be solved

The aim of the present invention is to provide a laser for nonlinear microscopy, which meets the following requirements:
1) is compact, easy to service and stable;
2) a wavelength is in the range between 1.1µm and 1.5µm;
3) pulse duration of the shifted-wavelength radiation is in the range from 15fs to 1ps;
4) it is desirable that the peak power is not less than 1MW;
5) a repetition rate of bursts of pulses is not less than 100kHz;
6) a power conversion efficiency from pump radiation to Raman radiation is at least 30%, preferably 50%;
7) ensures good quality of the laser beam.

### Disclosure of the invention

The invention is disclosed in independent claim 1. Preferred embodiments are given in the dependent claims.

A laser for nonlinear microscopy comprises: a source configured to emit a burst of ultrashort pump pulses comprising a first a second and subsequent pump pulses of a first wavelength *λ***₁**, an optical resonator formed by at least two mirrors, a solid-state nonlinear Raman medium placed inside said optical resonator, wherein the burst of ultrashort pump pulses is arranged to enter the optical resonator with the Raman medium placed on a path of a laser beam and generates a burst of ultrashort pulses of a second wavelength *λ*₂, a length of the optical resonator is chosen so that the second and subsequent pump pulses at least partially overlap in time with a pulse of the second wavelength *λ*₂ circulating inside the resonator when it propagates through the Raman medium, wherein the first pump pulse from the burst of pump pulses has a higher energy than other pump pulses from the burst; in the Raman medium, said first pump pulse generates a supercontinuum broadband radiation with **a** bandwidth overlapping the second wavelength *λ*₂; the burst of ultrashort pump pulses consists of three to several tens of pulses; duration of the pump pulses is from 30fs to 1ps.

According to preferred embodiments of the present invention:
Energy of the first pump pulse exceeds a supercontinuum generation threshold of the Raman medium, while energies of the second and subsequent pump pulses are lower than the supercontinuum generation threshold of the Raman medium.

The Raman medium is diamond, KGW, KYW, YVO₃, GdVO₃ or any other crystal featuring high Raman gain, as well as high nonlinear refractive index which allows to achieve self-focusing and supercontinuum generation with the first pump pulse.

A repetition rate of the burst of ultrashort pump pulses is not lower than 100kHz.

The optical resonator with the Raman medium placed on the path of the laser beam is a ring resonator formed by at least three mirrors; an optical length of said ring resonator is in the range from 10cm to 60cm, while a repetition rate of the ultrashort pump pulses within the burst is in the range from 0.5GHz to 3GHz.

The optical resonator comprises two mirrors, which are formed by coating the ends of the Raman medium with reflective optical coatings, and a repetition rate of the ultrashort pump pulses within the burst is in the range from 10GHz to 50GHz.

Pulses of radiation of the second wavelength *λ*₂ have a duration in the range from 15fs to 1ps, while a peak power is not lower than 1MW.

Sum energy of the burst of pump pulses is such that energy conversion efficiency from the pump radiation to the shifted-wavelength radiation is not less than 30%.

One of the mirrors forming the optical resonator is mounted on a piezo-translator position of which is controlled with a feedback system in order to stabilize the length of said resonator.

The repetition rate of the pump pulses within the burst is controlled in real time.

The sum energy of the burst of ultrashort pump pulses is from 3µJ to 30µJ.

The sum energy of the burst of ultrashort pump pulses is from 30µJ to 300µJ.

Radiation of more than one shifted wavelength is generated in the Raman medium: when a certain threshold intensity value of the second wavelength *λ*₂ radiation is reached, the second wavelength *λ*₂ radiation causes generation of a third wavelength *λ*₃ radiation.

Radiation of more than two shifted wavelengths is generated in the Raman medium: when a certain threshold intensity value of an *n*-th wavelength *λ*ₙ radiation is reached, the *n*-th wavelength *λ*ₙ radiation causes generation of an (*n*+1)-th wavelength *λ*ₙ₊₁ radiation, where *n* is any integer number.

Said source of the burst of ultrashort pump pulses is a laser system comprising a fiber oscillator, a fiber pulse stretcher, a fiber pulse burst synthesizer, a fiber laser amplifier and a pulse compressor.

### Advantages of the invention

Several advantages of the present invention can be identified. The pumping method - pumping with burst of pulses of high pulse repetition rate - allows to ensure small dimensions of the Raman resonator. In a mostly preferred embodiment of the invention, the source of pump radiation is based on fiber-optic laser components. Therefore, both the pump source and the external Raman resonator are very compact. As a result, the laser system is resistant to mechanical impacts and temperature variation. The method to synthesize bursts of pump pulses used in this invention allows to achieve at least 100kHz repetition rate of bursts, which is especially needed for fast scanning solutions. Secondly, the used pulse bursts synthesizing method allows to form bursts of a desired length and with an identical interval between pulses. The number of pulses in the burst is such that ensures that the process of stimulated Raman scattering attains saturation and the conversion efficiency to shifted-wavelength radiation exceeds 30%, and can often exceed 50%. On the other hand, with a shaped pulse burst, a very long burst will not be required: supercontinuum generation by the first pump pulse ensures rapid development of the process. A repeatable and stable burst of Raman radiation pulses is generated. The peak power of Stokes pulses of highest amplitude is at least 1MW. The proposed combination of parameters allows to offer to the market the laser source of ultrashort pulses in the spectral range above 1.1µm for nonlinear microscopy applications.

### Brief description of the drawings

Fig.1 - a principal block scheme of a Raman laser and its pumping method according to this invention.
Fig.2 - a preferred embodiment of this invention.

### Detailed description of the invention

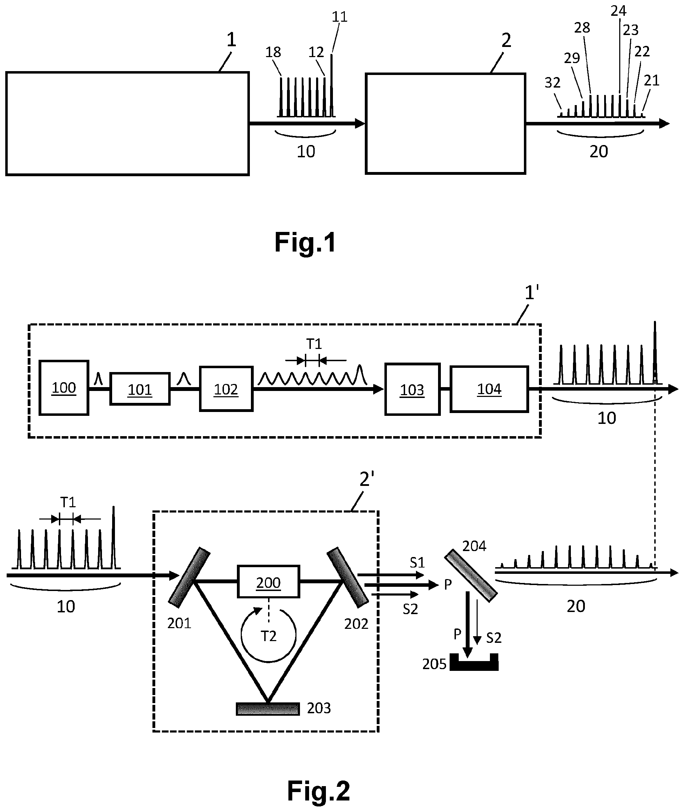

A principal scheme of a Raman laser of this invention is depicted in Fig.1. The system consists of a source 1 of pump radiation and an optical resonator 2, wherein a solid-state (bulk) Raman medium is placed on an optical path of the laser beam. The source 1 of pump radiation generates a burst 10 of ultrashort pump pulses. At the output of the optical resonator 2 with Raman medium (hereinafter referred to as Raman resonator), a burst 20 of ultrashort shifted-wavelength pulses is obtained.

A central wavelength of the pump radiation is *λ***₁**, and its bandwidth corresponds to an ultrashort pulse duration from 30fs to 1ps. The burst 10 of ultrashort pump pulses consists of several to several tens of pulses repeating at an extremely high repetition rate (from several hundred megahertz to 50GHz, preferably from 500MHz to 3GHz). Repetition rate of the bursts 10 itselves depends on the method the bursts are formed, but is not less than 100kHz.

The Raman medium is a nonlinear Raman-active medium which at the same time has high nonlinear refractive index *n₂.* A length of the resonator 2 is chosen to satisfy conditions for synchronous pumping: a roundtrip time of the resonator 2 is equal to the pulse period within the pump burst 10, or is slightly mismatched so that the shifted-wavelength pulse, which is emitted with a small time delay, coincides with the next pump pulse. The Raman resonator 2 consists of at least two mirrors. Alternatively, the resonator 2 may consist of three or more mirrors in order to make a circular trajectory for the laser beam (ring resonator).

The burst 10 of ultrashort pump pulses enters the Raman resonator 2 and generates the burst 20 of pulses with a shifted wavelength *λ*₂. If the resonator is designed for the Stokes wave to be generated, then the wavelength *λ*₂ of the burst 20 is longer than the wavelength *λ*₁ of the pump radiation. The wavelength relationship is described by the following formula: 1/*λ*₂ = 1/*λ*₁ - n_{R}/*c*, where n_{R} is a vibration frequency of the Raman medium, expressed in hertz (Hz), c is the speed of light. If the resonator parameters are chosen to generate the anti-Stokes wave, then the wavelength *λ*₂ of the burst 20 is less than the wavelength *λ*₁ of the pump radiation. The wavelength relationship is described by the following formula: 1/*λ*₂ = 1/*λ*₁ + n_{R}/*c*. The Stokes wave is generated more efficiently than the anti-Stokes waves. The Stokes radiation propagates collinearly with the pump radiation, and is more useful, if the shift of the wavelength towards the longer waves is required. In the preferred embodiments of the present invention, generation of the Stokes component is implemented. Using a pump radiation source based on Yb-ion doped active media (a central wavelength *λ*₁ is at about 1030nm) and a synthetic diamond crystal as Raman medium, radiation (the burst 20) at 1194nm wavelength can be obtained. By implementing a cascaded stimulated Raman scattering, it is possible to obtain radiation of even longer wavelength (1420nm) or several wavelengths simultaneously.

The first pulse 11 of the pump pulse burst 10 has a higher energy than other pump pulses 12-18. The energy of the first pump pulse 11 exceeds a supercontinuum generation threshold of the crystalline Raman medium. The aim is to generate a supercontinuum of such a bandwidth which overlaps the wavelength *λ*₂ of the Stokes or anti-Stokes wave. This ensures that the process of Raman scattering starts not from quantum noise, but from some seed radiation. Each pump pulse burst 10 generates a repeatable stable burst 20 of shifted wavelength.

Mirrors of said Raman resonator are such that a small part of the energy of the second wavelength *λ*₂ radiation is coupled out from the resonator, and a major part of the energy stays circulating in the resonator 2. The pump radiation is ejected from the resonator 2 after one pass through the Raman medium. The first pulse 21 of the shifted wavelength *λ*₂ is the *λ*₂ component arising during supercontinuum generation. A part of radiation leaves the resonator as a pulse 21, the other part is returned to the resonator for the next amplification cycle. Energies of the second and subsequent pump pulses 12-18 are below the supercontinuum generation threshold of the crystalline Raman medium. When the second pump pulse 12 enters the Raman medium, the pulse of the shifted wavelength *λ*₂ after a roundtrip inside the resonator becomes the seed radiation for a new Raman amplification cycle. Again, a part of radiation leaves the resonator and the other part is returned to the resonator, and so on. When pulse energy of the first-order Stokes wave attains a certain level, it in turn begins to be converted into a second-order Stokes radiation. The proposed resonator 2 may not be fully supportive for the second-order Stoke wave generation, and thus the second-order Stokes radiation will only be considered as loss. Once the gain and loss balance each other, amplification of the first-order Stokes radiation begins to saturate. As a result, a growth of amplitudes of pulses 23, 24 slows down. When the pump pulse burst 10 ends, the Raman radiation pulses circulate in the resonator for some time until exponentially decay. The decay of the burst 20 depends on the losses in the resonator, which are determined by the reflectance of the mirrors and the gain of the second-order Stokes wave. The shifted wavelength *λ*₂ is separated from other wavelengths by spectral filters.

During nonstationary Raman amplification, when it starts from noise, two factors influence pulse duration of the first-order Stokes pulse: the delay of the SRS process and the amplification of the second-order Stokes wave pulse with a similar delay (with respect to the first-order Stokes wave pulse). As a result, a duration and shape of the front edge are determined by the pump pulse, while a duration and shape of the trailing edge are determined by the conversion of power into a second-order Stokes wave. In our solution, the SRS process takes place with seed radiation - the supercontinuum generated by the first pump pulse 11. In this case, pump radiation has lower dependence on the formation of the front edge of the Stokes pulse. The trailing edge of the Stokes pulse is shortened by the power conversion to the second-order Raman radiation anyway. As a result, the first-order Stokes wave pulses 21-32 are shorter than the pump pulses 11-18. The Stokes pulse is weakly chirped due to material dispersion of the nonlinear crystal. The duration of the Stokes pulse could be further reduced using an external pulse compressor if said chirp is managed (e. g. is linear). A typical shortening of the Raman radiation pulse is 2 to 5 times.

Fig.2 illustrates a preferred embodiment of the present invention. The source of pump radiation is a system 1' consisting of: a fiber oscillator 100, a fiber pulse stretcher 101, a fiber-optic pulse burst synthesizer 102, a fiber amplifier 103, and a pulse compressor 104. The oscillator 100 based on an Yb-ion doped single-mode optical fiber generates a broadband radiation at 1030nm. A width of the spectrum corresponds to an ultrashort bandwidth-limited (according to the Fourier transform) pulse duration - from 30fs to 1ps. The mode-locked oscillator 100, in which the mode locking is done by a semiconductor saturable absorber mirror, emits a pulse at a repetition rate of tens of MHz. Energy is from a few to one hundred picojoule. Further, pulses are stretched in time. A simplest example of the fiber pulse stretcher 101 is a chirped fiber Bragg grating which works in reflection.

A gigahertz (GHz) burst of pulses is then formed. Any known method to form continuous or finite-length pulse sequences with an ultra-high pulse repetition rate can be employed. Examples of several different pulse burst formation methods are described in the following documents:
1) International patent application no. WO2009042024 "Pulse repetition frequency multiplier for fiber laser" (A. Starodoumov et al.);
2) C. Kerse et al., "3.5-GHz intra-burst repetition rate ultrafast Yb-doped fiber laser," Opt. Commun. 366, 404-409 (2016);
3) German patent DE102016124087 "Erzeugung von Laserpulsen in einem Burstbetrieb" (T. Eidam et al.);
4) K.-H. Wei et al., "Fiber laser pumped burst-mode operated picosecond mid-infrared laser," Chin. Phys. B 24 (2), 024217 (2015);
5) *T. Bartulevičius et al.,* "Compact high-power GHz intra-burst repetition rate all-in-fiber CPA system with LMA fiber power amplifier", Proc. SPIE 11260, Fiber Lasers XVII: Technology and Systems, 112602F (21 February 2020);
6) International patent application no. PCT/IB2019/058167 "Method for generating gigahertz bursts of pulses and laser apparatus thereof" (*A. Michailovas and T. Bartulevičius*); and
7) *T. Bartulevičius et al.,* "Active fiber loop for synthesizing GHz bursts of equidistant ultrashort pulses", Opt. Express 28, 13059-13067 (2020). Documents of *T. Bartulevičius et al.* also describe pulse amplitude and dispersion control.

The pulse burst with a desired number of pulses and intra-burst repetition rate, and of a desired amplitude profile from a single input pulse can be formed in the fiber-optic burst synthesizer 102. Pulses repeat inside the burst at ~1GHz repetition rate, thus a time period T1 between the pulses is equal to ~1ns. An identical distance between pulses can be obtained using the *T. Bartulevičius et al.* (2020) solution with an active fiber loop. This is particularly relevant for the synchronous pumping scheme. Secondly, a dispersion control results in identical pulse duration. A number of pulses in each burst is from 3 to 20. The higher amplitude of the first pulse can be made in the burst formation stage, as shown in the illustration. The highest achievable repetition of bursts depends on the pulse burst formation method; this is described in the aforementioned publications (ranges from 100kHz to several MHz).

The amplifier 103 is any high gain fiber amplifier: large-mode-area optical fiber, photonic crystal fiber, chiral type or tapered fiber amplifier. They can provide up to 40dB gain. We aim to achieve an average power of tens of watts and a relatively high pulse energy at microjoule level. A volume Bragg grating can be used to compress the pulses: it compensates a dispersion of the fiber pulse stretcher very well (as described by T. Bartulevicius et al., "Compact fiber CPA system based on a CFBG stretcher and CVBG compressor with matched dispersion profile", Opt. Express 25, 19856-19862 (2017)). In order to achieve high quality of a laser beam and to avoid a spatial chirp, we selected a free-space grating pulse compressor 104 in the preferred configuration of the system 1'. All the elements upwards the pulse compressor 104 are fiber-optic and spliced together, making the source 1' extremely compact and stable to mechanical disturbances. A single-grating two-pass pulse compressor can also be very compact and stable.

In the preferred embodiment of the present invention, the burst 10 of pump pulses is directed to a ring resonator 2' formed by at least three mirrors; a Raman medium 200 is placed inside the resonator on a path of the laser beam between a first mirror 201 and a second mirror 202. A diamond crystal of at least 5mm in length is selected. The crystal is mounted in a temperature-maintaining holder. The annular trajectory is good in that an optical isolator is not required to protect the pump source. In addition, the Raman radiation pulse propagates through the Raman medium only once during one resonator roundtrip - when the pump pulse propagates through it. Thus, additional linear and nonlinear losses are avoided.

The mirrors 201 and 203 are coated with optical coatings that transmit (1000-1100)nm radiation well, and the surface facing the inside of the resonator is coated with a high reflection coating for 1194nm first-order Stokes radiation. The mirror 202 is highly transmissive to the pump radiation P and partially transmissive to the first-order Stokes wave radiation S1. In order to provide the best conditions for the amplification of the first-order Stokes radiation in the resonator, the mirror 202 or all the mirrors are highly transmissive to the second-order Stokes wave radiation S2. Not more than 20% of energy of the first-order Stokes wave radiation (*λ*₂ = 1194nm) is emitted from the resonator 2'. The other part of its energy stays to circulate in the resonator 2'. The pump radiation P is ejected from the resonator after one pass through the Raman medium 200. Mirrors 201 and 202 may be concave to form a caustic of the Raman radiation laser beam in the diamond crystal. The pump beam is focused (lens not shown in Fig.2) into a spot of similar size. With the selective mirror 204 the first-order Stokes wave radiation S1 is separated from the residual pump radiation P and, if necessary, from the second-order Stokes wave radiation S2. Unneeded radiation is directed to a beam block 205.

The roundtrip time T2 of the resonator 2' is similar to the pump pulse period T1 in order to satisfy synchronous pumping conditions which allow to achieve higher efficiency. The efficiency also depends on the peak power of the pump pulses and the period T1. The power of the Stokes wave depends on how much the second and subsequent pump pulses 12-18 overlap with the Stokes radiation pulse circulating inside the resonator 2' as it propagates through the Raman medium 200. If the roundtrip time T2 of the Raman resonator 2 is exactly equal to the pump pulse period T1, the pulse circulating inside the resonator arrives to the Raman medium later than the next pump pulse. They overlap only partially, and only the end of the pump pulse is used for amplification. The Raman resonator 2' must be slightly shorter to achieve highest power of Raman radiation. An exact value of the Raman resonator length detuning which results in the highest power of the Stokes radiation also depends on the duration of pump pulses. A resonator length to achieve the highest Stokes radiation power does not coincide with a length to achieve the shortest pulse. There are several options:
1) the roundtrip time T2 of the resonator 2 is equal to the period of pump pulses T1 within the burst 10;
2) the roundtrip time T2 of the resonator 2 is up to 10% shorter than the period of pump pulses T1;
3) the roundtrip time T2 of the resonator 2 is up to 5% longer than the period of pump pulses T1.

The Raman resonator may also have more mirrors as long as the required length is formed. For example, an X-shaped resonator with 4 mirrors can be designed. High pulse repetition rate of the pump pulse burst 10 needs a short resonator. For 500MHz repetition rate of pump pulses inside the burst, the optical length of the Raman resonator should be about 60cm (the aforementioned length detuning is of the order of ten micrometers). If the repetition rate of the pump pulses is 1GHz, a 30cm-optical-length resonator is required, and so on. The (0.5-3)GHz repetition rate of pulses inside the burst 10 and the three-mirror resonator 2' is the best realization of the laser source of the present invention.

The energy of ultrashort pump pulses 11-18 must be chosen satisfying the following conditions:
- the first pulse 11 forms a beautiful filament (thread of light due to a beam self-focusing) in which the multiplication of the spectral components and the generation of supercontinuum take place. Spectrum broadening is required to overlap the first-order Stokes wavelength of 1194 nm; the intensity of this spectral component must be stable and 1000 times higher than a level of quantum noise;
- the energy of the pulse 11 does not exceed the damage threshold of the Raman medium 200;
- energy of other pump pulses of the burst 10 is less than the filamentation threshold in the diamond;
- sum energy of the burst 10 of pump pulses is such that power conversion efficiency from the pump pulse burst 10 to the Stokes radiation pulse burst 20 is not less than 30%, preferably (40-50)%;
- if generation of a second-order Stokes wave radiation begins, the efficiency of the first-order Stokes wave generation is at least 30%.

Diamond is a good material not only because of a large Raman shift, but also because of its very good thermal conductivity. This prevents the formation of a thermal lens and the resonator misalignment from the stability zone, allowing high beam quality and brightness to be achieved. In our experiments, the threshold of supercontinuum generation in diamond was (0.6-0.7)µJ at the selected spot size of the pump beam. With the sum energy of the pump pulse burst 10 in the range of ~(3-6)µJ, the sum energy of the first-order Stokes radiation pulse burst 20 is in the range of (0.9-3)µJ.

There are two ways to fulfill conditions of synchronous pumping and stabilize the system. First, the length of the Raman resonator can be adjusted: one of the resonator mirrors 201, 202 or 203 is mounted on a piezo-translator, the position of which is controlled by a feedback system depending on changes of the pump pulse period T1 or the length of the resonator due to mechanical disturbances or temperature. Second, some pulse burst synthesizing methods allow to precisely adjust a period of pulses, thus, as an alternative to resonator length adjustment, the pump pulse period T1 can be controlled with the help of the feedback system. The repetition rate of the pump pulses within the burst 10 can be controlled in real time.

Other realizations:
- *Fabry-Perot* two-mirror free-space optical resonator or the Raman medium with optical coatings deposited on its ends. Having a pump pulse burst 10 with an extremely high pulse repetition rate (up to 50GHz), a very compact system is realized.
- Raman medium 200 is any solid-state material, such as KGW, KYW, YVO₃, GdVO₃ crystals, featuring stimulated Raman scattering and a high nonlinear refractive index, which allows self-focusing and filamentation to be achieved. In sharp focusing conditions, the supercontinuum generation threshold is in the (0.03-0.60)µJ range for different crystals. Therefore, 1µJ sum energy of pump pulse burst 10 may be sufficient.
- In the main embodiment of the present invention, the mirrors of the resonator 2' are such that at least 10% part of the radiation energy of the second wavelength *λ*₂ is coupled out from the resonator. In other embodiments, only a very small portion, less than 5%, of the radiation energy is coupled out from the resonator.

- According to another embodiment of the present invention, more than one shifted wavelength is generated: the first-order Stokes wave (*λ*₂) generates the second-order Stokes wave (of a third wavelength *λ*₃). If the mirror 202 partially reflects the second-order Stokes wave (*λ*₃) back to the resonator, amplification of *λ*₃ is supported. This results in amplification of two wavelengths. If the pump wavelength is *λ*₁ = 1030nm, the generated wavelengths in diamond are *λ*₂ = 1194nm and *λ*₃ = 1420nm. The first and second order Stokes waves are separated by spectral filters outside the resonator. According to yet another embodiment, all mirrors of the optical resonator 2' are highly reflective (have a reflection coefficient greater than 99.9%) for the first-order Stokes wave (*λ*₂). In this case, only a second-order Stokes wave (*λ*₃) will be emitted to the output.
- According to yet another embodiment of the present invention, more than two shifted wavelengths are generated. Various parameter sets are available that optimize the generation of multiple shifted wavelengths simultaneously or, conversely, enhance the generation of one selected wavelength.
- According to a particular embodiment of the present invention, radiation of the third or other shifted wavelengths is coupled out from the optical resonator through the same output mirror as the radiation of the second wavelength *λ*₂, and is externally separated by spectral filters.
- According to another particular embodiment of the present invention, all mirrors of the optical resonator have a reflection coefficient higher that 99.9% for the second wavelength *λ*₂ radiation.
- Fiber pump sources can usually generate bursts of pump pulses with up to 30µJ energy. Hybrid or solid-state pump sources allow to have pump pulse bursts with up to 300µJ energy.

Crystals with Raman activity, such as YVO₄, GdVO₄, KGW, and others, are often used for supercontinuum generation. During supercontinuum generation, the (1.1-1.5)µm spectral range is covered quite easily, but the overall conversion efficiency is only of the order of a few percent. I. e. a-few-watt femtosecond pump laser source of (20-500)fs pulses, generates radiation with several tens of milliwatts average power over the entire (1.1-1.5)µm spectral range. The overall spectral brightness of such a source is too low for nonlinear microscopy applications. Increasing the pump power does not solve the problem because supercontinuum crystals tend to degrade when exposed to very high intensity fs pulses. Therefore, it is advisable to not exceed the supercontinuum generation threshold by more than two times in order to ensure the long lifetime of the laser system. As a result, the power of the generated radiation in said spectral range is limited. The present invention solves this problem by realizing the amplification of the generated supercontinuum in a synchronously pumped Raman resonator, which in this case can be called a Raman amplifier. The first pulse from the pump burst generates a broad spectrum - seed radiation for Raman amplification. The subsequent pump pulses amplify the seed radiation but do not have enough energy to focus and generate a supercontinuum. By avoiding focusing, the risk of damaging the crystal is reduced and it will work for a long time. Further, since seed radiation of moderate energy exists, Raman amplifier effectively converts the energy of the pump pulses into the pulses of Raman radiation. A safe mode in terms of damage is implemented and at the same time spectrally-shifted radiation pulses are generated very efficiently (several tens of percent conversion efficiency is achieved).

There are two effects that influence the Raman gain saturation. First, it is the depletion of the energy of the pump pulse during amplification. Second, efficient generation of a second-order Stokes wave which limits the growth rate of the first-order Stokes wave. In addition, the combined effect of both processes yields a shorter pulse duration of the generated Stokes pulse, shorter than that of the pump pulse. According to the first embodiment of the present invention, in order to minimize the influence of the second-order Stokes wave generation on the first-order Stokes wave generation, Raman resonator mirrors have a highest possible transmittance for the second-order Stokes radiation wavelength. This avoids the optical feedback for the wavelength of the second-order Stokes wave and reduces its influence on the output energy of the first-order Stokes radiation pulse. To further reduce the feedback for the second-order Stokes wave, the Raman resonator is formed using more than two mirrors, thus avoiding surfaces perpendicular to the beam propagating in the resonator.

We know from modeling that if the amplitudes of the pump pulses were the same, then pumping by the pulse bursts would not achieve high conversion efficiency: pulses at the beginning of the pump pulse burst would amplify very inefficiently, and it would take many cycles for Raman amplification to reach saturation. This means that up to a half the pulses or even more transfer their energy to the Stokes wave very inefficiently. Without supercontinuum seed, such a Raman wavelength conversion device would require very long bursts of pulses (longer than 20) for a good power/energy conversion efficiency to achieve. This would cause the spectral and temporal properties of the Stokes pulses to vary greatly within the burst. In our proposed solution, the effective amplification starts already at the beginning of the pump pulse burst, starting from the second pump pulse. This allows not only to achieve up to several times better conversion efficiency and faster gain saturation, but also to generate shortened pulses over almost the entire burst of Stokes radiation. The seed radiation originating from supercontinuum helps to unify the parameters of the Stokes pulses.

The spectral and temporal properties of the Stokes pulses are also affected by self-phase modulation. However, the self-phase modulation of each pulse in the burst of amplified Stokes radiation is different due to the different path traveled in the nonlinear crystal and due to the different peak intensity of the pulses. One may try to compress the self-phase modulated, i. e. chirped, pulses in an external pulse compressor, but the main shortening of the Stokes pulses compared to the pump pulses happens due to Raman amplification; mostly, when the Raman gain begins to saturate.

Thus, pumping by bursts of pulses allows to make the Raman resonator really compact. While pumping with the pulse bursts of shaped profile allows to ensure the fast development of the process up to a saturation regime, which ensures high energy efficiency, repeatability of Stoke pulse parameters and highest available peak power.

## Claims

1. Laser for nonlinear microscopy comprising
- a source (1) configured to emit a burst (10) of ultrashort pump pulses comprising a first, a second and subsequent pump pulses of a first wavelength *λ*₁,
- an optical resonator (2) formed by at least two mirrors,
- a solid-state nonlinear Raman medium (200) placed inside said optical resonator (2), wherein
- the burst (10) of ultrashort pump pulses is arranged to enter the optical resonator (2) with the Raman medium (200) placed on a path of a laser beam and generates a burst (20) of ultrashort pulses of a second wavelength *λ*₂,
- a length of the optical resonator (2) is chosen so that the second and subsequent pump pulses (12-18) at least partially overlap in time with a pulse of the second wavelength *λ*₂ circulating inside the resonator (2) when it propagates through the Raman medium (200),
- duration of the pump pulses (11-18) is from 30fs to 1ps,
**characterized in that**
- the first pump pulse (11) from the burst (10) of pump pulses has a higher energy than other pump pulses (12-18) from the burst (10);
- in the Raman medium (200), said first pump pulse (11) generates a supercontinuum broadband radiation with a bandwidth overlapping the second wavelength *λ*₂;
- the burst (10) of ultrashort pump pulses consists of three to several tens of pulses.

2. Laser according to claim 1, **characterized in that** energy of the first pump pulse (11) exceeds a supercontinuum generation threshold of the Raman medium (200), while energies of the second and subsequent pump pulses (12-18) are lower than the supercontinuum generation threshold of the Raman medium (200).

3. Laser according to any one of the preceding claims, **characterized in that** the Raman medium (200) is diamond, KGW, KYW, YVO₃, GdVO₃ or any other crystal featuring high Raman gain, as well as high nonlinear refractive index which allows to achieve self-focusing and supercontinuum generation with the first pump pulse (11).

4. Laser according to any one of the preceding claims, **characterized in that** a repetition rate of the burst (10) of ultrashort pump pulses is not lower than 100kHz.

5. Laser according to any one of the preceding claims, **characterized in that** the optical resonator (2) with the Raman medium (200) placed on the path of the laser beam is a ring resonator (2') formed by at least three mirrors (201, 202, 203); an optical length of said resonator (2') is in the range from 10cm to 60cm, while a repetition rate of the ultrashort pump pulses (11-18) within the burst (10) is in the range from 0.5GHz to 3GHz.

6. Laser according to any one of claims 1-4, **characterized in that** the optical resonator (2) comprises two mirrors, which are formed by coating the ends of the Raman medium (200) with reflective optical coatings, and a repetition rate of the ultrashort pump pulses (11-18) within the burst (10) is in the range from 10GHz to 50GHz.

7. Laser according to any one of the preceding claims, **characterized in that** pulses of radiation of the second wavelength *λ₂* have a duration in the range from 15fs to 1ps, while a peak power is not lower than 1MW.

8. Laser according to any one of the preceding claims, **characterized in that** sum energy of the burst (10) of pump pulses is such that energy conversion efficiency from the pump radiation to the shifted-wavelength radiation is not less than 30%.

9. Laser according to any one of the preceding claims, **characterized in that** one of the mirrors forming the optical resonator (2) is mounted on a piezo-translator position of which is controlled with a feedback system in order to stabilize the length of said resonator (2).

10. Laser according to any one of the preceding claims, **characterized in that** the repetition rate of the pump pulses within the burst (10) is controlled in real time.

11. Laser according to any one of the preceding claims, **characterized in that** the sum energy of the burst (10) of ultrashort pump pulses is from 3µJ to 30µJ.

12. Laser according to any one of claims 1-10, **characterized in that** the sum energy of the burst (10) of ultrashort pump pulses is from 30µJ to 300µJ.

13. Laser according to any one of the preceding claims, **characterized in that** radiation of more than one shifted wavelength is generated in the Raman medium (200): when a certain threshold intensity value of the second wavelength *λ*₂ radiation is reached, the second wavelength *λ*₂ radiation causes generation of a third wavelength *λ*₃ radiation.

14. Laser according to any one of claims 1-12, **characterized in that** radiation of more than two shifted wavelengths is generated in the Raman medium (200):
when a certain threshold intensity value of an n-th wavelength *λ*ₙ radiation is reached, the n-th wavelength *λ*ₙ radiation causes generation of an (*n*+1)-th wavelength *λ*ₙ₊₁ radiation, where *n* is any integer number.

15. Laser according to any one of the preceding claims, **characterized in that**
the source (1) of the burst (10) of ultrashort pump pulses is a laser system (1') comprising a fiber oscillator (100), a fiber pulse stretcher (101), a fiber pulse burst synthesizer (102), a fiber laser amplifier (103) and a pulse compressor (104).

## Patentansprüche

1. Laser für die nichtlineare Mikroskopie, umfassend:
- eine Quelle (1), die dazu konfiguriert ist, eine Abfolge (10) ultrakurzer Pumpimpulse auszusenden, die einen ersten, einen zweiten und nachfolgende Pumpimpulse einer ersten Wellenlänge *λ*₁ umfasst,
- einen optischen Resonator (2), der durch mindestens zwei Spiegel gebildet ist,
- ein nichtlineares Raman-Festkörpermedium (200), das innerhalb des optischen Resonators (2) plaziert ist, wobei
- die Abfolge (10) ultrakurzer Pumpimpulse so angeordnet ist, dass sie in den optischen Resonator (2) eintritt, wobei das Raman-Medium (200) auf einem Pfad eines Laserstrahls plaziert ist, und eine Abfolge (20) ultrakurzer Impulse einer zweiten Wellenlänge *λ*₂ erzeugt,
- eine Länge des optischen Resonators (2) so gewählt ist, dass sich der zweite und die nachfolgenden Pumpimpulse (12-18) zumindest teilweise zeitlich mit einem innerhalb des Resonators (2) umlaufenden Impuls der zweiten Wellenlänge *λ*₂ überlappen, wenn er das Raman-Medium (200) durchläuft,
- eine Dauer der Pumpimpulse (11-18) von 30 fs bis 1 ps beträgt,
**dadurch gekennzeichnet, dass**
- der erste Pumpimpuls (11) aus der Abfolge (10) von Pumpimpulsen eine höhere Energie als andere Pumpimpulse (12-18) aus der Abfolge (10) aufweist;
- der erste Pumpimpuls (11) in dem Raman-Medium (200) eine breitbandige Superkontinuumstrahlung mit einer Bandbreite erzeugt, welche die zweite Wellenlänge *λ*₂ überlappt;
- die Abfolge (10) ultrakurzer Pumpimpulse aus drei Impulsen bis mehreren zehn Impulse besteht.

2. Laser nach Anspruch 1, **dadurch gekennzeichnet, dass**
die Energie des ersten Pumpimpulses (11) einen Superkontinuumserzeugungsschwellenwert des Raman-Mediums (200) überschreitet, während die Energien des zweiten und der folgenden Pumpimpulse (12-18) niedriger als der Superkontinuumserzeugungsschwellenwert des Raman-Mediums (200) sind.

3. Laser nach einem der vorhergehenden Ansprüche, **dadurch gekennzeichnet, dass** das Raman-Medium (200) Diamant, KGW, KYW, YVO₃, GdVO₃ oder ein beliebiger anderer Kristall mit hoher Raman-Verstärkung sowie hohem nichtlinearem Brechungsindex ist, der es ermöglicht, mit dem ersten Pumpimpuls (11) eine Selbstfokussierung und Superkontinuumserzeugung zu erreichen.

4. Laser nach einem der vorhergehenden Ansprüche, **dadurch gekennzeichnet, dass** eine Repetitionsrate der Abfolge (10) ultrakurzer Pumpimpulse nicht weniger als 100 kHz beträgt.

5. Laser nach einem der vorhergehenden Ansprüche, **dadurch gekennzeichnet, dass** der optische Resonator (2) mit dem auf dem Pfad des Laserstrahls platzierten Raman-Medium (200) ein Ringresonator (2') ist, der aus mindestens drei Spiegeln (201, 202, 203) gebildet ist; eine optische Länge des Ringresonators (2') im Bereich von 10 cm bis 60 cm liegt, während eine Pulsrepetitionsrate der ultrakurzen Pumpimpulse (11-18) innerhalb der Abfolge (10) im Bereich von 0,5 GHz bis 3 GHz liegt.

6. Laser nach einem der Ansprüche 1-4, **dadurch gekennzeichnet, dass** der optische Resonator (2) zwei Spiegel umfasst, die durch Beschichten der Enden des Raman-Mediums (200) mit reflektierenden optischen Beschichtungen gebildet werden, und eine Pulsrepetitionsrate der ultrakurzen Pumpimpulse (11-18) innerhalb der Abfolge (10) im Bereich von 10 GHz bis 50 GHz liegt.

7. Laser nach einem der vorhergehenden Ansprüche, **dadurch gekennzeichnet, dass** Strahlungsimpulse der zweiten Wellenlänge *λ*₂ eine Dauer im Bereich von 15 fs bis 1 ps aufweisen, während die Spitzenleistung nicht weniger als 1 MW beträgt.

8. Laser nach einem der vorhergehenden Ansprüche, **dadurch gekennzeichnet, dass** eine Summenenergie der Abfolge (10) von Pumpimpulsen derart ist, dass der Wirkungsgrad der Energieumwandlung von der Pumpstrahlung in die Strahlung mit verschobener Wellenlänge nicht weniger als 30 % beträgt.

9. Laser nach einem der vorhergehenden Ansprüche, **dadurch gekennzeichnet, dass** einer der Spiegel, die den optischen Resonator (2) bilden, auf einem Piezotranslator montiert ist, dessen Position mit einem Rückkopplungssystem gesteuert wird, um die Länge des Resonators (2) zu stabilisieren.

10. Laser nach einem der vorhergehenden Ansprüche, **dadurch gekennzeichnet, dass** die Pulsrepetitionsrate der Pumpimpulse innerhalb der Abfolge (10) in Echtzeit gesteuert wird.

11. Laser nach einem der vorhergehenden Ansprüche, **dadurch gekennzeichnet, dass** die Summenenergie der Abfolge (10) ultrakurzer Pumpimpulse von 3 µJ bis 30 µJ beträgt.

12. Laser nach einem der Ansprüche 1-10, **dadurch gekennzeichnet, dass** die Summenenergie der Abfolge (10) ultrakurzer Pumpimpulse von 30 µJ bis 300 µJ beträgt.

13. Laser nach einem der vorhergehenden Ansprüche, **dadurch gekennzeichnet, dass** eine Strahlung von mehr als einer verschobenen Wellenlänge in dem Raman-Medium (200) erzeugt wird: wenn ein gewisser Schwellenintensitätswert der Strahlung der zweiten Wellenlänge *λ*₂ erreicht wird, verursacht die Strahlung der zweiten Wellenlänge *λ*₂ eine Erzeugung einer Strahlung der dritten Wellenlänge *λ*₃.

14. Laser nach einem der Ansprüche 1-12, **dadurch gekennzeichnet, dass** eine Strahlung von mehr als zwei verschobenen Wellenlängen in dem Raman-Medium (200) erzeugt wird: wenn ein gewisser Schwellenintensitätswert einer Strahlung der *n*-ten Wellenlänge *λ*ₙ erreicht wird, verursacht die Strahlung der *n*-ten Wellenlänge *λ*ₙ eine Erzeugung einer Strahlung der (*n*+1)-ten Wellenlänge *λ*_{n+1,} wobei *n* eine beliebige ganze Zahl ist.

15. Laser nach einem der vorhergehenden Ansprüche, **dadurch gekennzeichnet, dass** die Quelle (1) der Abfolge (10) ultrakurzer Pumpimpulse ein Lasersystem (1') ist, das einen Faseroszillator (100), einen Faserimpulsstrecker (101), einen Faserimpulsabfolgen-Synthetisierer (102) und einen Faserlaserverstärker (103) und einen Impulskompressor (104) umfasst.

## Revendications

1. Laser pour microscopie non-linéaire comprenant
- une source (1) configurée pour émettre une rafale (10) d'impulsions de pompe ultracourtes comprenant une première, une deuxième et des impulsions de pompe suivantes d'une première longueur d'onde λ₁,
- un résonateur optique (2) formé d'au moins deux miroirs,
- un milieu Raman non-linéaire à l'état solide (200) placé à l'intérieur dudit résonateur optique (2), dans lequel
- la rafale (10) d'impulsions de pompe ultracourtes est configurée pour entrer dans le résonateur optique (2) avec le milieu Raman (200) placé sur un trajet d'un faisceau laser et génère une rafale (20) d'impulsions ultracourtes d'une deuxième longueur d'onde λ₂,
- une longueur du résonateur optique (2) est choisie de telle sorte que la deuxième et les impulsions de pompe suivantes (12-18) chevauchent au moins partiellement dans le temps une impulsion de la deuxième longueur d'onde λ₂ circulant à l'intérieur du résonateur optique (2) lorsqu'elle se propage à travers le milieu Raman (200),
- une durée des impulsions de pompe (11-18) est de 30 fs à 1 ps,
**caractérisé en ce que**
- la première impulsion de pompe (11) provenant de la rafale (10) d'impulsions de pompe a une énergie plus élevée que des autres impulsions de pompe (12-18) provenant de la rafale (10);
- dans le milieu Raman (200), ladite première impulsion de pompe (11) génère un rayonnement supercontinuum à large bande avec une bande passante chevauchant la deuxième longueur d'onde λ₂;
- la rafale (10) d'impulsions de pompe ultracourtes est constituée de trois à plusieurs dizaines d'impulsions.

2. Laser selon la revendication 1, **caractérisé en ce que**
une énergie de la première impulsion de pompe (11) dépasse un seuil de génération de supercontinuum du milieu Raman (200), tandis que des énergies de la deuxième et des impulsions de pompe suivantes (12-18) sont inférieures au seuil de génération de supercontinuum du milieu Raman (200).

3. Laser selon l'une quelconque des revendications précédentes, **caractérisé en ce que** le milieu Raman (200) est du diamant, KGW, KYW, YVO₃, GdVO₃ ou tout autre cristal présentant un gain Raman élevé, ainsi qu'un indice de réfraction non-linéaire élevé qui permet d'obtenir une auto-focalisation et une génération de supercontinuum avec la première impulsion de pompe (11).

4. Laser selon l'une quelconque des revendications précédentes, **caractérisé en ce que** un taux de répétition de la rafale (10) d'impulsions de pompe ultracourtes n'est pas inférieur à 100 kHz.

5. Laser selon l'une quelconque des revendications précédentes, **caractérisé en ce que** le résonateur optique (2) avec le milieu Raman (200) placé sur le trajet du faisceau laser est un résonateur en anneau (2') formé d'au moins trois miroirs (201, 202, 203); une longueur optique dudit résonateur en anneau (2') est dans la gamme de 10 cm à 60 cm, tandis qu'un taux de répétition des impulsions de pompe ultracourtes (11-18) dans la rafale (10) est dans la gamme de 0,5 GHz à 3 GHz.

6. Laser selon l'une quelconque des revendications 1 à 4, **caractérisé en ce que** le résonateur optique (2) comprend deux miroirs, qui sont formés par revêtement des extrémités du milieu Raman (200) avec des revêtements optiques réfléchissants, et un taux de répétition des impulsions de pompe ultracourtes (11-18) dans la rafale (10) est dans la gamme de 10 GHz à 50 GHz.

7. Laser selon l'une quelconque des revendications précédentes, **caractérisé en ce que** des impulsions de rayonnement de la deuxième longueur d'onde λ₂ ont une durée dans la gamme de 15 fs à 1 ps, tandis que la puissance de crête n'est pas inférieure à 1 MW.

8. Laser selon l'une quelconque des revendications précédentes, **caractérisé en ce que** une énergie totale de la rafale (10) d'impulsions de pompe est telle que l'efficacité de conversion d'énergie du rayonnement de pompe en rayonnement à longueur d'onde décalée ne soit pas inférieure à 30%.

9. Laser selon l'une quelconque des revendications précédentes, **caractérisé en ce que** l'un des miroirs formant le résonateur optique (2) est monté sur un translateur piézo-électrique dont la position est commandée par un système de rétroaction afin de stabiliser la longueur dudit résonateur (2).

10. Laser selon l'une quelconque des revendications précédentes, **caractérisé en ce que** le taux de répétition des impulsions de pompe dans la rafale (10) est commandé en temps réel.

11. Laser selon l'une quelconque des revendications précédentes, **caractérisé en ce que** l'énergie totale de la rafale (10) d'impulsions de pompe ultracourtes est comprise entre 3 µJ et 30 µJ.

12. Laser selon l'une quelconque des revendications 1 à 10, **caractérisé en ce que** l'énergie totale de la rafale (10) d'impulsions de pompe ultracourtes est comprise entre 30 µJ et 300 µJ.

13. Laser selon l'une quelconque des revendications précédentes, **caractérisé en ce que** un rayonnement de plus d'une longueur d'onde décalée est généré dans le milieu Raman (200): lorsqu'une certaine valeur d'intensité seuil de rayonnement de la deuxième longueur d'onde λ₂ est atteinte, le rayonnement de deuxième longueur d'onde λ₂ provoque la génération d'un rayonnement de troisième longueur d'onde λ₃.

14. Laser selon l'une quelconque des revendications 1 à 12, **caractérisé en ce que** un rayonnement de plus de deux longueurs d'onde décalées est généré dans le milieu Raman (200): lorsqu'une certaine valeur d'intensité seuil de rayonnement d'une *n*-ième longueur d'onde λₙ est atteinte, le rayonnement de la *n*-ième longueur d'onde λₙ provoque la génération d'un rayonnement de (*n*+1)-ième longueur d'onde λₙ₊₁, *n* étant n'importe quel nombre entier.

15. Laser selon l'une quelconque des revendications précédentes, **caractérisé en ce que** la source (1) de la rafale (10) d'impulsions de pompe ultracourtes est un système laser (1') comprenant un oscillateur à fibre (100), un étireur d'impulsions à fibre (101), un synthétiseur de rafale d'impulsions à fibre (102), un amplificateur laser à fibre (103) et un compresseur d'impulsions (104).
